(19) Europäisches Patentamt
European Patent Office
Office européen des brevets

(11) **EP 4 011 993 A1**

(12) **EUROPEAN PATENT APPLICATION**
published in accordance with Art. 153(4) EPC

(43) Date of publication:
**15.06.2022 Bulletin 2022/24**

(21) Application number: **20850418.3**

(22) Date of filing: **04.08.2020**

(51) International Patent Classification (IPC):
***C09J 4/04*** *(2006.01)* ***C09J 11/06*** *(2006.01)*

(52) Cooperative Patent Classification (CPC):
**C09J 11/06**

(86) International application number:
**PCT/JP2020/029906**

(87) International publication number:
**WO 2021/025037 (11.02.2021 Gazette 2021/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.08.2019 JP 2019146573**

(71) Applicant: **Toagosei Co., Ltd.**
**Minato-ku**
**Tokyo 105-8419 (JP)**

(72) Inventors:
- **ISSHIKI, Erika**
  **Nagoya-shi, Aichi 455-0026 (JP)**
- **KONDO, Kei**
  **Nagoya-shi, Aichi 455-0026 (JP)**
- **ISHIZAKI, Kenichi**
  **Nagoya-shi, Aichi 455-0026 (JP)**
- **OKAZAKI, Eiichi**
  **Nagoya-shi, Aichi 455-0026 (JP)**

(74) Representative: **Rüger Abel Patentanwälte PartGmbB**
**Patentanwälte**
**Webergasse 3**
**73728 Esslingen a. N. (DE)**

# (54) ADHESIVE COMPOSITION WHICH EASILY DISINTEGRATES IN WATER

(57) An easily water-dismantlable adhesive composition containing a 2-cyanoacrylate compound represented by Formula (1): in which $L^1$'s each independently represent $-CH_2CH_2-$, $-CH(R^1)CH_2-$, or $-CH_2CH(R^1)-$, $R^1$ represents an alkyl group having 1 to 3 carbon atoms, $R^2$ represents a linear or branched alkyl group having 1 to 4 carbon atoms, p represents an integer of 3 to 6, and, among p $-L^1-O-$'s in Formula (1), 2 to 4 $-L^1-O-$'s are $-CH_2CH_2-O-$, and 0 to 2 - $I^1$-O-'s are $-CH(R^1)CH_2-$ and/or $-CH_2CH(R^1)-O-$.

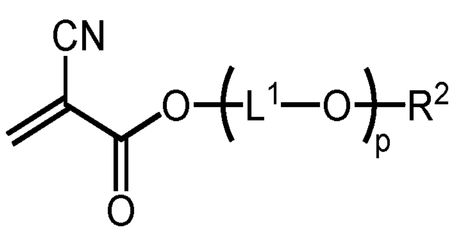

(1)

EP 4 011 993 A1

## Description

The present invention relates to an easily water-dismantlable adhesive composition.

In an adhesive composition containing a 2-cyanoacrylate compound, polymerization is initiated by weak anions such as slight moisture attached to a surface of an adherend due to specific anionic polymerizability of the 2-cyanoacrylate compound as a main component, and various materials can be firmly bonded in a short time. Therefore, as a so-called instant adhesive, it is used in a wide range of fields such as industrial uses, medical uses, and household uses.

A cured product of an adhesive composition containing a 2-cyanoacrylate compound is hard and has excellent shear adhesive strength, but the adhesive composition has too strong adhesiveness. Therefore, when the adhesive composition is cured and then peeled or removed, it may take time or damage an adherend.

As a technique for peeling a cured product of an adhesive composition containing a 2-cyanoacrylate compound, for example, Patent Document 1 describes that a cyanoacrylate adhesive composition having improved water solubility after being cured, which is obtained by blending a water-soluble polyoxyalkylene glycol-based solvent and a water-soluble surfactant in a cyanoacrylate, is immersed in hot water or pressurized hot water to be peeled.

Patent Document 2 describes a method of fixing a quartz glass workpiece to a surface plate with a fixing agent, machining the workpiece, and then peeling the workpiece from the surface plate by heating, in which the fixing agent is an ultraviolet curable resin, and the workpiece is impregnated with a halogen-containing organic solvent before being peeled from the surface plate, and describes that a cyanoacrylic adhesive is used as the fixing agent.

Patent Document 1: Japanese Patent Application Laid-Open (JP-A) No. 2000-73015
Patent Document 2: Japanese Patent Application Laid-Open (JP-A) No. 2011-104747

However, in the technique described in Patent Document 1, in order to peel the adhesive composition, it is necessary to immerse the cured product in hot water or pressurized hot water (100°C to 130°C) for 20 minutes to 80 minutes. In the technique described in Patent Document 2, it is necessary to heat the cured product in water until the water boils and to hold the cured product for about 5 minutes to about 20 minutes after the water boils.

Therefore, for example, in a case where fingers of a person adhere to each other, there is a risk of burn injury, and thus, the methods described in these documents cannot be adopted. Also, there is a problem that, in a case where the adhesive composition is used for temporary adhesion for industrial use, the cost is increased in order to secure and maintain an amount of heat required for peeling.

In view of the above, an object of the present invention is to provide an easily water-dismantlable adhesive composition that can be easily peeled or removed with water after being cured.

Means for solving the problem include the following aspects.

<1> An easily water-dismantlable adhesive composition containing a 2-cyanoacrylate compound represented by the following Formula (1):

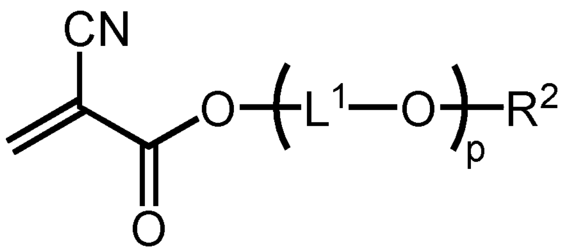

(1)

wherein $L^1$'s each independently represent $-CH_2CH_2-$, $-CH(R^1)CH_2-$, or $-CH_2CH(R^1)-$, $R^1$ represents an alkyl group having 1 to 3 carbon atoms, $R^2$ represents a linear or branched alkyl group having 1 to 4 carbon atoms, p represents an integer of 3 to 6, and, among p $-L^1-O-$'s in Formula (1), 2 to 4 $-L^1-O-$'s are $-CH_2CH_2-O-$, and 0 to 2 $-L^1-O-$'s are $-CH(R^1)CH_2-$ and/or $-CH_2CH(R^1)-O-$.

<2> The easily water-dismantlable adhesive composition according to <1>, wherein a residual rate of insoluble components in water is 90 mass% or less, after adding 1 μL of N,N-dimethyl-p-toluidine to 1.0 g of the adhesive composition; stirring the mixture; then putting 1.0 g of a disk-shaped cured product having a diameter of 25 mm and a thickness of 2 mm, obtained by leaving the mixture at 23°C and 60% RH for 24 hours and curing the mixture, in 50 g of pure water at 23°C; and stirring the mixture for 1 hour.

<3> The easily water-dismantlable adhesive composition according to <1> or <2>, wherein an adhesive residual rate is 90 mass% or less, after impregnating 0.2 g of the adhesive composition into a central part of a piece having a size of 5 cm × 5 cm, obtained by cutting a cotton canvas having a length of 7,681 m and a density of 510 g/$m^2$

per 453.6 g of weight of yarn; leaving the piece to stand at 23°C and 60% RH for 24 hours; and immersing the piece in 80 g of water at 23°C for 2 hours.

<4> The easily water-dismantlable adhesive composition according to any one of <1> to <3>, wherein an adhesive residual rate is 90 mass% or less, after impregnating 0.2 g of the adhesive composition into a central part of a piece having a size of 5 cm × 5 cm, obtained by cutting a cotton canvas having a length of 7,681 m and a density of 510 $g/m^2$ per 453.6 g of weight of yarn; leaving the piece to stand at 23°C and 60% RH for 24 hours; and immersing the piece in 80 g of water at 40°C for 0.5 hours.

<5> The easily water-dismantlable adhesive composition according to any one of <1> to <4>, wherein a total light transmittance of a suspension obtained by mixing 0.18 g of the adhesive composition with 90 g of water at 23°C is 20% or more.

<6> The easily water-dismantlable adhesive composition according to any one of <1> to <5>, wherein a haze value of the suspension obtained by mixing 0.18 g of the adhesive composition with 90 g of water at 23°C is 90% or more.

<7> The easily water-dismantlable adhesive composition according to any one of <1> to <6>, wherein a contact angle of the adhesive composition with glass is 38.0° or more.

<8> The easily water-dismantlable adhesive composition according to any one of <1> to <7>, further containing a water-soluble compound.

<9> The easily water-dismantlable adhesive composition according to <8>, wherein the water-soluble compound is at least one compound selected from the group consisting of ethylene carbonate, dimethyl sulfone, sulfolane, γ-butyrolactone, propylene carbonate, triethylene glycol dimethyl ether, tetraethylene glycol dimethyl ether, polyoxyalkylene decyl ether, and fatty acid polyoxyethylene glycerol borate.

<10> The easily water-dismantlable adhesive composition according to any one of <1> to <9>, wherein a residual rate in water is 90 mass% or less, after adding 1 μL of N,N-dimethyl-p-toluidine to 1.0 g of the adhesive composition; stirring the mixture; then putting 1.0 g of a disk-shaped cured product having a diameter of 25 mm and a thickness of 2 mm, obtained by leaving the mixture at 23°C and 60% RH for 24 hours and curing the mixture, in 50 g of pure water at 23°C; and stirring the mixture for 1 hour under a condition of 500 rpm, and a time from start of the stirring until visually recognized disappearance of a solid substance of the cured product is 24 hours or less.

<11> The easily water-dismantlable adhesive composition according to any one of <1> to <10>, which is an easily water-dismantlable adhesive composition for temporary fixation.

<12> The easily water-dismantlable adhesive composition according to any one of <1> to <11>, which is an easily water-dismantlable adhesive composition for teaching materials.

The present invention can provide an easily water-dismantlable adhesive composition that can be easily peeled or removed with water after being cured.

The description of the components described below may be made based on representative embodiments of the present invention, but the present invention is not limited to such embodiments. As used herein, the term "to" is used to mean that numerical values indicated before and after the term "to" are included as a lower limit value and an upper limit value.

In the numerical ranges described in stages herein, the upper limit value or the lower limit value described in one numerical range may be replaced with the upper limit value or the lower limit value of any other numerical range described in stages. In addition, in the numerical ranges described herein, the upper limit values or the lower limit values of the numerical ranges may be replaced with values shown in Examples.

In the present invention, the terms "mass%" and "weight%" have the same meaning, and the terms "parts by mass" and "parts by weight" have the same meaning.

In the present invention, a combination of two or more preferred embodiments is a more preferred embodiment.

Hereinafter, contents of the present invention will be described in detail.

(Easily water-dismantlable adhesive composition)

An easily water-dismantlable adhesive composition (hereinafter, also simply referred to as "adhesive composition") of the present invention contains a 2-cyanoacrylate compound represented by the following Formula (1).

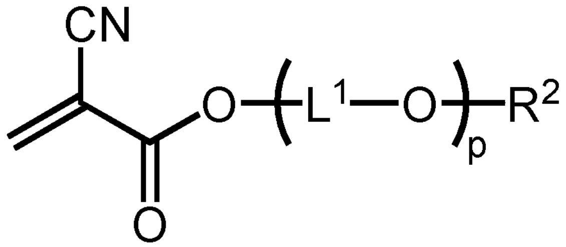

(1)

wherein $L^1$'s each independently represent $-CH_2CH_2-$, $-CH(R^1)CH_2-$, or $-CH_2CH(R^1)-$, $R^1$ represents an alkyl group having 1 to 3 carbon atoms, $R^2$ represents a linear or branched alkyl group having 1 to 4 carbon atoms, p represents an integer of 3 to 6, and, among p $-L^1-O-$'s in Formula (1), 2 to 4 $-L^1-O-$'s are $-CH_2CH_2-O-$, and 0 to 2 $-L^1-O-$'s are $-CH(R^1)CH_2-$ and/or - $CH_2CH(R^1)$)-O-.

As a result of intensive studies by the present inventors, it has been found that the use of the above configuration can provide an easily water-dismantlable adhesive composition that can be peeled or removed with water after being cured.

The action mechanism of the excellent effect by the adhesive composition is not clear, but is estimated as follows.

It is presumed that, due to the fact that the 2-cyanoacrylate compound represented by Formula (1) has 3 to 6 1,2-alkyleneoxy structures, hydrophilicity in a cured product to be obtained is improved; that, due to excellent water permeability into the cured product, the cured product is embrittled upon water absorption and swelling of the cured product and disassembly due to a slight external force; and that, due to occurrence of water permeation into an adhesion interface and a decrease in adhesive force, peelability or removability (in the present invention, also referred to as "easy water-dismantlability".) with water after curing is excellent.

The adhesive composition of the present invention is excellent in easy water-dismantlability, and thus can be easily peeled or removed, in a short time, with hot water or pressurized hot water, and can also be peeled or removed, for example, by being immersed in water in a temperature range from normal temperature (15°C to 25°C) to about a temperature of lukewarm water (30°C to 45°C).

<2-Cyanoacrylate compound represented by Formula (1)>

The adhesive composition of the present invention contains a 2-cyanoacrylate compound represented by Formula (1) above.

$R^1$'s in Formula (1) each independently represent an alkyl group with 1 to 3 carbon atoms, which may have a substituent, and may be a linear alkyl group or a branched alkyl group. Examples of the substituent include an aryl group, a halogen atom, an alkoxy group, an aryloxy group, a cyano group, an alkoxycarbonyl group, an aryloxycarbonyl group, an acyl group, and an acyloxy group. Among them, a halogen atom or an alkoxy group is preferable, and a halogen atom is more preferable.

Examples of $R^1$ in Formula (1) include a methyl group, a chloromethyl group, an ethyl group, a chloroethyl group, and a propyl group.

Among them, from the viewpoint of easy water-dismantlability, $R^1$'s are each independently preferably an alkyl group having 1 or 2 carbon atoms, more preferably a methyl group, a chloromethyl group, or an ethyl group, and particularly preferably a methyl group.

In addition, all $R^1$'s in Formula (1) are preferably the same groups.

$R^2$ in Formula (1) represents an alkyl group with 1 to 6 carbon atoms, which may have a substituent, and may be a linear alkyl group or a branched alkyl group. Examples of the substituent include the substituents described above for $R^1$.

$R^2$ in Formula (1) is preferably an alkyl group having 1 to 4 carbon atoms, more preferably a methyl group, an ethyl group, an n-propyl group, an isopropyl group, an n-butyl group, a sec-butyl group, or an isobutyl group, and particularly preferably a methyl group or an ethyl group, from the viewpoint of easy water-dismantlability.

In Formula (1), p is an integer of preferably 3 to 5, more preferably 3 or 4, and particularly preferably 3.

$L^1$'s in Formula (1) are each independently preferably $-CH_2CH_2$-or-$CH_2CH(R^1)$-,and more preferably $-CH_2CH_2$-from the viewpoint of easy water-dismantlability.

In Formula (1), from the viewpoint of easy water-dismantlability, it is preferable that, among p $-L^1-O-$'s, 2 to 4 $-L^1-O-$'s be $-CH_2CH_2$-O-and 0 or 1 $-L^1-O-$'s be $-CH(R^1)CH_2$-or - $CH_2CH(R^1)$-O-; that 3 or 4 $-L^1-O-$'s be $-CH_2CH_2-O-$; and that 3 $-L^1-O-$'s be $-CH_2CH_2-O-$.

In Formula (1), the arrangement of $-CH_2CH_2$-O-and $-CH(R^1)CH_2-$ and/or - $CH_2CH(R^1)$-O-in the p $-L^1-O-$'s may be random or may be in a block shape in which the same structure is continuous. For example, the 2-cyanoacryloxy group in Formula (1) may bind to any of $-CH_2CH_2-O-$, $-CH(R^1)CH_2$-and $-CH_2CH(R^1)-O-$, or $R^2$ in Formula (1) may bind

to any of $-CH_2CH_2-O-$, $-CH(R^1)CH_2-$and $-CH_2CH(R^1)-O-$.

Specific examples of the 2-cyanoacrylate compound represented by Formula (1) include esters of 2-[2-(2-methoxyethoxy)ethoxy]ethyl, 2-[2-(2-ethoxyethoxy)ethoxy]ethyl, 2-[2-(2-propyloxyethoxy)ethoxy]ethyl, 2-[2-(2-butyloxyethoxy)ethoxy]ethyl, 2-[2-(2-pentyloxyethoxy)ethoxy]ethyl, 2-[2-(2-hexyloxyethoxy)ethoxy]ethyl, 2-[2-(2-methoxypropyloxy)ethoxy]ethyl, 2-[2-(2-methoxybutyloxyethoxy]ethyl, 2-[2-(2-methoxypentyloxy)ethoxy]ethyl, 2-[2-(2-methoxyethoxy)propyloxy]ethyl, 2-[2-(2-methoxyethoxy)butyloxy]ethyl, 2-[2-(2-methoxyethoxy)pentyloxy]ethyl, 2-[2-(2-methoxyethoxy)ethoxy]propyl, 2-[2-(2-methoxyethoxy)ethoxy]butyl, 2-[2-(2-methoxyethoxy)ethoxy]pentyl, 2-{2-[2-(2-methoxyethoxy)ethoxy]ethoxy}ethyl, 2-{2-[2-(2-methoxypropyloxy)ethoxy]ethoxy}ethyl, 2-{2-[2-(2-methoxyethoxy)propyloxy]ethoxy}ethyl, 2-{2-[2-(2-methoxyethoxy)ethoxy]propyloxy}ethyl, 2-{2-[2-(2-methoxyethoxy)ethoxy]ethoxy}propyl, and 2-{2-[2-(2-methoxyethoxy)ethoxy]ethoxy}ethyl of 2-cyanoacrylic acid.

Among them, from the viewpoint of easy water-dismantlability, 2-[2-(2-methoxyethoxy)ethoxy]ethyl-2-cyanoacrylate or 2-[2-(2-ethoxyethoxy)ethoxy] ethyl-2-cyanoacrylate is preferable, and 2-[2-(2-methoxyethoxy)ethoxy]ethyl-2-cyanoacrylate (compound represented by the following Formula (2)) is more preferable.

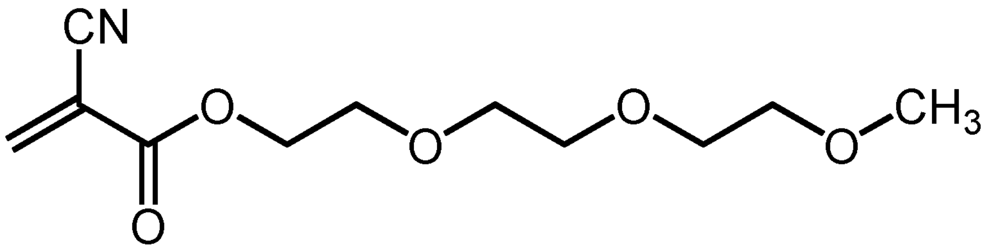

(2)

The 2-cyanoacrylate compound represented by Formula (1), which is used in the adhesive composition of the present invention, may be used alone, or two or more thereof can be used in combination.

A content of the 2-cyanoacrylate compound represented by Formula (1) in the adhesive composition of the present invention is preferably 40 mass% or more and 100 mass% or less, more preferably 50 mass% or more and 99.5 mass% or less, yet more preferably 60 mass% or more and 90 mass% or less, and particularly preferably 70 mass% or more and 85 mass% or less, with respect to the total mass of the adhesive composition, from the viewpoint of easy water-dismantlability, adhesiveness, and curability.

<Water-soluble compound>

The adhesive composition of the present invention preferably further contains a water-soluble compound, from the viewpoint of easy water-dismantlability.

The water-soluble compound is preferably soluble in the 2-cyanoacrylate compound represented by Formula (1), which is contained in the adhesive composition of the present invention, from the viewpoint of easy water-dismantlability and compatibility with the 2-cyanoacrylate compound represented by Formula (1).

In the present invention, the fact that the water-soluble compound is soluble in the 2-cyanoacrylate compound represented by Formula (1) means that, when 1 part by mass of the water-soluble compound to be used is mixed and stirred at 25 °C with 100 parts by mass of the 2-cyanoacrylate compound represented by Formula (1) to be used, phase separation is not visually recognized, and a uniform mixture can be formed.

In the present invention, the term "water-soluble compound" means a compound that is admixed with water in an arbitrary mixing ratio to form a solution, or has a solubility in water (25°C) of 1 g/100 g or more.

A solubility parameter (SP value) of the water-soluble compound is preferably 8.0 $(cal/cm^3)^{0.5}$ or more and 23.4 $(cal/cm^3)^{0.5}$ or less, more preferably 8.3 $(cal/cm^3)^{0.5}$ or more and 15.0 $(cal/cm^3)^{0.5}$ or less, yet more preferably 8.3 $(cal/cm^3)^{0.5}$ or more and 14.0 $(cal/cm^3)^{0.5}$ or less, and particularly preferably 9.0 $(cal/cm^3)^{0.5}$ or more and 14.0 $(cal/cm^3)^{0.5}$ or less, from the viewpoint of easy water-dismantlability and compatibility with the 2-cyanoacrylate compound represented by Formula (1).

In addition, the SP value of the water-soluble compound is preferably a high value from the viewpoint of a speed of peeling and dismantling with water.

The solubility parameter (SP value) in the present invention is a value calculated by the calculation method described in "Polymer Engineering and Science" 14(2), 147 (1974) authored by R.F. Fedors. Specifically, the calculation method shown in Formula (3) is used. Note that 2.0455 $(cal/cm^3)^{0.5}$ = 1 $MPa^{0.5}$.

$$\delta = \sqrt{\frac{\sum \Delta E_{vap}}{\sum V}} \quad (3)$$

$\delta$: SP value ($(cal/cm^3)^{1/2}$)
$\Delta Evap$: molar evaporation heat (cal/mol) of each atomic group
V: molar volume of each atomic group ($cm^3/mol$)

In addition, in a case where two or more kinds are used in combination, calculation is performed by the following equation.

$$(\text{SP value of mixture})^2 = (\text{volume fraction of component 1}) \times (\text{SP value of component 1})^2 + (\text{volume fraction of component 2}) \times (\text{SP value of component 2})^2 + \cdots$$

The water-soluble compound used in the present invention may be a low molecular weight compound or a high molecular weight compound. The low molecular weight compound preferably has a molecular weight of less than 1,000, and the high molecular weight compound preferably has a weight average molecular weight of 1,000 or more, and more preferably has a weight average molecular weight of 1,000 or more and 1,000,000 or less.

Values of number average molecular weight (Mn) and weight average molecular weight (Mw) of the high molecular weight compound in the present invention are measured by gel permeation chromatography (GPC).

The water-soluble compound is not particularly limited, but is preferably a compound having at least one bond selected from the group consisting of an ester bond, a carbonate bond, and a sulfonyl bond, and more preferably a compound having at least one bond selected from the group consisting of a carbonate bond and a sulfonyl bond, from the viewpoint of easy water-dismantlability and compatibility with the 2-cyanoacrylate compound represented by Formula (1).

Preferable examples of the water-soluble high molecular weight compound include polyacrylic acid, polyacrylate, cellulose acetate, and cellulose acetate butyrate.

Furthermore, it is also preferable to use a low molecular weight compound and a high molecular weight compound in combination as the water-soluble compound, from the viewpoint of easy water-dismantlability and viscosity.

Among them, the water-soluble compound is preferably at least one compound selected from the group consisting of ethylene carbonate, dimethyl sulfone, sulfolane, $\gamma$-butyrolactone, propylene carbonate, triethylene glycol dimethyl ether, tetraethylene glycol dimethyl ether, ethylene glycol diethyl ether, diethylene glycol diethyl ether, ethylene glycol monomethyl ether acetate, polyoxyalkylene alkyl ether, polyoxyalkylene dialkyl ether, polyoxyalkylene acetate, polyoxyalkylene diacetate, and fatty acid polyoxyethylene glycerol borate, and is more preferably at least one compound selected from the group consisting of ethylene carbonate, dimethyl sulfone, sulfolane, propylene carbonate, triethylene glycol dimethyl ether, tetraethylene glycol dimethyl ether, polyoxyalkylene alkyl ether, polyoxyalkylene dialkyl ether, polyoxyalkylene acetate, polyoxyalkylene diacetate, and fatty acid polyoxyethylene glycerol borate, from the viewpoint of easy water-dismantlability and compatibility with the 2-cyanoacrylate compound represented by Formula (1).

From the viewpoint of versatility, the water-soluble compound is preferably at least one compound selected from the group consisting of ethylene carbonate, $\gamma$-butyrolactone, dimethyl sulfone, propylene carbonate, triethylene glycol dimethyl ether, tetraethylene glycol dimethyl ether, ethylene glycol diethyl ether, diethylene glycol diethyl ether, ethylene glycol monomethyl ether acetate, polyoxyalkylene alkyl ether, polyoxyalkylene dialkyl ether, polyoxyalkylene acetate, and polyoxyalkylene diacetate.

As the polyoxyalkylene alkyl ether, polyoxyalkylene dialkyl ether, polyoxyalkylene acetate, and polyoxyalkylene diacetate described above, for example, a compound having a structure represented by the following Formula (1) is preferable.

$$R\text{-}(OCH_2CHX)_n\,(OCH_2CH_2)_m\text{-}OR'$$

(In Formula (1), R and R' each represent a hydrogen atom, or a linear or branched alkyl group or alkyl acetate group having 1 to 20 carbon atoms, X represents an alkyl group having 1 to 10 carbon atoms, n represents an integer of 0 to 20, and m represents an integer of 0 to 20.)

Preferred examples of the fatty acid polyoxyethylene glycerol borate include EMULBON (registered trademark)

T-20 (polyoxyethylene glycerol borate-laurate), EMULBON T-40 (polyoxyethylene glycerol borate-palmitate), EMULBON T-60 (polyoxyethylene glycerol borate-stearate), EMULBON T-66 (polyoxyethylene glycerol borate-stearate), EMULBON T-80 (polyoxyethylene glycerol borate-oleate), EMULBON T-83 (polyoxyethylene glycerol borate-oleate), and EMULBON T-160 (polyoxyethylene glycerol borate-isostearate) manufactured by Toho Chemical Industry Co., Ltd.

The water-soluble compound represented by Formula (1), which is used in the adhesive composition of the present invention, may be used alone, or two or more thereof can be used in combination.

A content of the water-soluble compound in the adhesive composition of the present invention is preferably 0.5 mass% or more and 50 mass% or less, more preferably 1 mass% or more and 40 mass% or less, yet more preferably 5 mass% or more and 35 mass% or less, and particularly preferably 10 mass% or more and 30 mass% or less, with respect to the total mass of the adhesive composition, from the viewpoint of easy water-dismantlability.

<Other components>

The adhesive composition of the present invention may contain other components than the 2-cyanoacrylate compound represented by Formula (1) and the water-soluble compound.

As other components, a stabilizer, a curing accelerator, a plasticizer, a thickener, particles, a colorant, a perfume, a solvent, a strength improver, and the like, which have been conventionally used by being blended in an adhesive composition containing a 2-cyanoacrylate compound, can be blended in an appropriate amount within a range in which curability, adhesive strength, and the like of the adhesive composition are not impaired, depending on the purpose.

Examples of the stabilizer include (1) aliphatic sulfonic acids such as sulfur dioxide and methanesulfonic acid, aromatic sulfonic acids such as p-toluenesulfonic acid, boron trifluoride complexes such as boron trifluoride methanol and boron trifluoride diethyl ether, anionic polymerization inhibitors such as $HBF_4$ and trialkylborate, and (2) radical polymerization inhibitors such as hydroquinone, hydroquinone monomethyl ether, t-butylcatechol, catechol, and pyrogallol. These stabilizers may be used singly, or two or more thereof may be used in combination.

Any curing accelerator can be used as long as it accelerates the anionic polymerization of the 2-cyanoacrylate-based adhesive composition. Examples of the curing accelerator include polyether compounds, calixarenes, thiacalixarenes, pyrogallolarenes, and onium salts. These curing accelerators may be used singly, or two or more thereof may be used in combination.

Examples of the plasticizer include triethyl acetylcitrate, tributyl acetylcitrate, dimethyl adipate, diethyl adipate, dimethyl sebacate, dimethyl phthalate, diethyl phthalate, dibutyl phthalate, diisodecyl phthalate, dihexyl phthalate, diheptyl phthalate, dioctyl phthalate, bis(2-ethylhexyl)phthalate, diisononyl phthalate, diisotridecyl phthalate, dipentadecyl phthalate, dioctyl terephthalate, diisononyl isophthalate, decyl toluate, bis(2-ethylhexyl)camphorate, 2-ethylhexylcyclohexylcarboxylate, diisobutyl fumarate, diisobutyl maleate, triglyceride caproate, 2-ethylhexyl benzoate, and dipropylene glycol dibenzoate. Among them, at least one compound selected from the group consisting of tributyl acetylcitrate, dimethyl adipate, dimethyl phthalate, 2-ethylhexyl benzoate, and dipropylene glycol dibenzoate is preferable from the viewpoint of good compatibility with the 2-cyanoacrylate compound and high plasticization efficiency. These plasticizers may be used singly, or two or more thereof may be used in combination.

Examples of the thickener include polymethyl methacrylate, a copolymer of methyl methacrylate and an acrylic acid ester, a copolymer of methyl methacrylate and any other methacrylic acid ester, acrylic rubber, polyvinyl acetate, polyvinyl chloride, a polyurethane resin, a polyamide resin, polystyrene, a cellulose ester, polyalkyl-2 cyanoacrylic acid ester, and an ethylene-vinyl acetate copolymer. These thickeners may be used singly, or two or more thereof may be used in combination.

The particles that may be blended in the adhesive composition are for adjusting a thickness of the adhesive layer when the adhesive composition is used.

An average particle diameter of the particles is preferably 10 μm to 200 μm, more preferably 15 μm to 200 μm, and yet more preferably 15 μm to 150 μm .

A material for the particles is not particularly limited as long as it is insoluble in the 2-cyanoacrylate compound to be used and does not cause deterioration such as polymerization. Examples of the material for the particles include thermoplastic resins such as polyethylene, polypropylene, polymethylpentene, acrylic resins, polyvinyl chloride, polytetrafluoroethylene, polyethylene terephthalate, polybutylene terephthalate, polysulfone, and polyphenylene oxide; crosslinked resins such as unsaturated polyester, divinylbenzene polymers, divinylbenzene-styrene copolymers, divinylbenzene-(meth) acrylic acid ester copolymers, and diallyl phthalate polymers; inorganic compounds such as spherical silica, glass beads, and glass fiber; silicone compounds; and organic-inorganic composite particles containing an organic polymer skeleton and a polysiloxane skeleton.

A content of the particles is not particularly limited, but is preferably 0.1 parts by mass to 10 parts by mass, more preferably 1 part by mass to 5 parts by mass, and yet more preferably 1 part by mass to 3 parts by mass when the content of the 2-cyanoacrylate compound is 100 parts by mass. When the content is in the range of 0.1 parts by mass to 10 parts by mass, the influence on the curing speed and the adhesive strength can be reduced.

The average particle diameter of the particles in the present invention is a volume-based average value measured by a laser diffraction particle size distribution measuring apparatus.

<Residual rate of cured product>

A residual rate of insoluble components in water after adding 1 μL of N,N-dimethyl-p-toluidine to 1.0 g of the adhesive composition; stirring the mixture; then putting 1.0 g of a disk-shaped cured product having a diameter of 25 mm and a thickness of 2 mm, obtained by leaving the mixture at 23°C and 60% RH for 24 hours and curing the mixture, in 50 g of pure water at 23°C; and stirring the mixture for 1 hour is preferably 80 mass% or less, more preferably 50 mass% or less, yet more preferably 10 mass% or less, particularly preferably 1 mass% or less, and most preferably 0 mass%, from the viewpoint of easy water-dismantlability.
The residual rate is measured as follows.
One (1) μL of N,N-dimethyl-p-toluidine is added to 1.0 g of the adhesive composition, and the mixture is stirred. Then, 1.0 g of a disk-shaped cured product having a diameter of 25 mm and a thickness of 2 mm, obtained by leaving the mixture at 23°C and 60% RH for 24 hours and curing the mixture, is put in 50 g of pure water at 23°C, and the mixture is stirred for 1 hour. After the stirring, a liquid in which the cured product is dispersed and/or dissolved is filtered off with filter paper of 5 types A specified in JIS P 3801, to calculate a residual rate of insoluble components.

$$\text{Residual rate (mass\%)} = \text{(dry mass of insoluble components)/(mass of cured product used)} \times 100$$

The residual rate in water after adding 1 μL of N,N-dimethyl-p-toluidine to 1.0 g of the adhesive composition; stirring the mixture; then putting 1.0 g of a disk-shaped cured product having a diameter of 25 mm and a thickness of 2 mm, obtained by leaving the mixture at 23°C and 60% RH for 24 hours and curing the mixture, in 50 g of pure water at 23°C; and stirring the mixture for 1 hour under a condition of 500 rpm is preferably 90 mass% or less, more preferably 50 mass% or less, yet more preferably 10 mass% or less, and particularly preferably 0 mass%, from the viewpoint of easy water-dismantlability.
Furthermore, a time from start of the stirring until visually recognized disappearance of a solid substance of the cured product is preferably 24 hours or less, more preferably 18 hours or less, yet more preferably 12 hours or less, particularly preferably 3 hours or less, and most preferably 1 hour or less, from the viewpoint of easy water-dismantlability. A lower limit is not particularly limited, but is preferably 45 minutes or more.

<Residual rate of cured product after immersion in water after permeation into cotton canvas and curing of adhesive composition>

An adhesive residual rate after impregnating 0.2 g of the adhesive composition into a central part of a piece having a size of 5 cm × 5 cm, obtained by cutting a cotton canvas having a length of 7,681 m (8,400 yards) and a density of 510 $g/m^2$ per 453.6 g (1 pound) of weight of yarn (cotton canvas No. 9 defined in JIS L 3102 (1997)); leaving the piece to stand at 23°C and 60% RH for 24 hours; and immersing the piece in 80 g of water at 23°C for 2 hours is preferably 80 mass% or less, more preferably 50 mass% or less, yet more preferably 10 mass% or less, particularly preferably 1 mass% or less, and most preferably 0 mass%, from the viewpoint of easy water-dismantlability.
An adhesive residual rate after impregnating 0.2 g of the adhesive composition into a central part of a piece having a size of 5 cm × 5 cm, obtained by cutting a cotton canvas having a length of 7,681 m (8,400 yards) and a density of 510 $g/m^2$ per 453.6 g (1 pound) of weight of yarn (cotton canvas No. 9 defined in JIS L 3102 (1997)); leaving the piece to stand at 23°C and 60% RH for 24 hours; and immersing the piece in 80 g of water at 40°C for 0.5 hours is preferably 80 mass% or less, more preferably 50 mass% or less, yet more preferably 20 mass% or less, and particularly preferably 1 mass% or less, from the viewpoint of easy water-dismantlability.
The adhesive residual rate is measured as follows.
The adhesive composition (0.2 g) is impregnated into a central part of a cotton canvas having a length of 7,681 m (8,400 yards) and a density of 510 $g/m^2$ per 453.6 g (1 pound) of weight of yarn of 5 cm square (cotton canvas No. 9 defined in JIS L 3102 (1997)). The piece is left to stand at 23 °C and 60% RH for 24 hours to cure the adhesive composition, and then immersed in 80 mL of water at 23°C or 40°C for 2 hours. The residual rate is calculated from the weight after the surface of the cloth is washed with water at 23°C and then dried at 23°C for 24 hours.
The adhesive composition of the present invention contains a 2-cyanoacrylate compound represented by Formula (1) above, and thus is cured by moisture in the air at 23°C.

Residual rate (mass%) in cotton canvas = {(mass of cotton canvas before immersion (including cured product of adhesive) - (dry mass of cotton canvas dried after immersion (including remaining cured product of adhesive))}/(mass of adhesive composition used) × 100

<Total light transmittance and haze value>

A total light transmittance of a suspension obtained by mixing 0.18 g of the adhesive composition of the present invention with 90 g of water at 23°C is preferably 20% or more, more preferably 40% or more, yet more preferably 60% or more, and particularly preferably 70% or more.

A haze value of the suspension obtained by mixing 0.18 g of the adhesive composition of the present invention with 90 g of water at 23°C is preferably 90% or less, more preferably 70% or less, yet more preferably 50% or less, and particularly preferably 40% or less.

The total light transmittance and the haze value are measured as follows.

The adhesive composition (0.18 g) is added to 90 g of water at 23°C with stirring, and the mixture is stirred as it is at room temperature (23°C) for 15 minutes to obtain a suspension. The obtained suspension is put in a 50 mL cell for a turbidimeter, and the total light transmittance and the haze value are measured in accordance with JIS K0115 using a turbidimeter (NDH 2000 manufactured by Nippon Denshoku Industries Co., Ltd.).

<Contact angle with glass>

A contact angle of the adhesive composition of the present invention with glass is preferably 38.0° or more, more preferably 39.0° or more, and particularly preferably 40.0° or more.

The contact angle with glass is measured as follows.

The contact angle of the adhesive composition with glass is measured using a white glass (S111 manufactured by Matsunami Glass Ind., Ltd.) in accordance with JIS R 3703 and using a contact angle measuring apparatus (OCA20 manufactured by EKO Instruments Co., Ltd.) in accordance with JIS R 3257. The measurement conditions are as follows: dropping amount: 8 μL, dropping rate: 5 μL/s, and time to measurement: 3 seconds.

The easily water-dismantlable adhesive composition of the present invention is not particularly limited, and can be used for various applications.

Among them, the easily water-dismantlable adhesive composition of the present invention enables easy peeling or removal, with water, of the adhesive composition at an adhered part or the adhesive composition attached to an unnecessary part and cured, and therefore can be suitably used as, for example, an easily water-dismantlable adhesive composition for temporary fixation or an easily water-dismantlable adhesive composition for teaching materials. A cured product obtained by curing the easily water-dismantlable adhesive composition of the present invention can be easily peeled or removed by being immersed in water in a temperature range from normal temperature (15°C to 25°C) to about a temperature of lukewarm water (30°C to 45°C), and thus can be easily peeled or removed with water, for example, even when it is attached to an unnecessary part, such as fingers, and cured. In addition, since it is possible to peel or remove it with water in a temperature range from normal temperature to about a temperature of lukewarm water, and thus to reduce an amount of heat required for peeling and to reduce the cost when used for temporary fixation for industrial uses.

Here, examples of the temporary fixation for industrial uses include temporary fixation of various electronic materials such as semiconductor wafers, optical materials or the like with various jigs such as polishing surface plates.

In addition, an adherend to be adhered by the easily water-dismantlable adhesive composition of the present invention is not particularly limited, and may be an inorganic compound, an organic compound, or an inorganic-organic composite, and may be made of the same material or different materials. In addition, the easily water-dismantlable adhesive composition of the present invention can adhere a solid material having any shape.

The easily water-dismantlable adhesive composition of the present invention can also be suitably used in a temporary fixation method.

That is, the temporary fixation method of the present invention includes:

a step of preparing an adhesive composition of the present invention (hereinafter, referred to as an "adhesive composition preparation step");

a step of forming an adhesive layer made of the adhesive composition between a plurality of members (hereinafter, referred to as an "adhesive layer formation step");

a step of curing the adhesive layer formed between the plurality of members to obtain a cured product, and temporarily adhering the plurality of members to each other by the cured product (hereinafter, referred to as a "temporary

adhesion step"); and

a step of bringing the cured product into contact with water to dismantle the cured product, and separating the plurality of members from each other (hereinafter, referred to as a "separation step".),

in this order.

The "dismantling" of the cured product in the present disclosure does not require that the whole cured product is dissolved or dispersed in a solvent such as water, and it is sufficient that at least a part of the cured product be dissolved or dispersed in the solvent, or swelled, and that adhered members can be peeled from each other.

The temporary fixation method of the present invention may include a step of processing the temporarily adhered members into a desired shape (hereinafter, referred to as a "processing step"), between the temporary adhesion fixation and the separation step.

Hereinafter, each step included in the temporary fixation method of the present invention will be described.

The adhesive composition preparation step is a step of preparing the adhesive composition of the present invention.

The respective components of the adhesive composition such as the 2-cyanoacrylate compound represented by Formula (1), which can be used in the present step, are as described above.

In this step, an adhesive composition can be produced by mixing and stirring the 2-cyanoacrylate compound represented by Formula (1) and, if necessary, any other component such as a water-soluble compound to obtain a homogeneous liquid. The method for mixing the 2-cyanoacrylate compound represented by Formula (1) with any other component such as a water-soluble compound is not particularly limited, but the adhesive composition can be produced by leaving the mixed liquid at a temperature ranging from room temperature to 60°C or lower, or mixing the mixed liquid using a stirrer or the like.

The adhesive layer formation step is a step of forming an adhesive layer made of the adhesive composition on at least one member among a plurality of members or between a plurality of members.

The adhesive layer formation step can be, for example, a step of applying the adhesive composition to an adherend surface of one or more members to be fixed, superimposing another member on the applied part, and repeating the procedures. In the present embodiment, in order to apply the adhesive composition, a dispenser, a coater, a roll, a brush, a spatula, a spray, an application jig, or the like may be used in accordance with the shape of the adherend. Alternatively, a method of immersing an adherend laminated in advance in the adhesive composition, and impregnating the adhesive composition into a gap of the adherend can also be indicated. The adherend is not particularly limited as long as it is not degenerated by the adhesive composition or water having a temperature of from room temperature to about a temperature of lukewarm water, and metals, ceramics, plastics, and the like can be used.

The temporary adhesion step is a step of curing the adhesive composition applied between the plurality of members to obtain a cured product, and temporarily adhering the plurality of members to each other by the cured product.

Since the adhesive composition can be instantaneously cured with slight moisture, a cured product can be obtained without need to provide a special device or special conditions. In order to promote the curing reaction, curing may be performed by heating the adhesive composition to a temperature range not affecting the adherend, for example, about 40°C to 100°C.

The separation step is a step of bringing the cured product into contact with water to dismantle the cured product, and separating the plurality of members from each other.

In the separation step, examples of the method of bringing the cured product into contact with water include a method of immersing the adherend in water, a method of exposing the adherend to flowing water, and a method of spraying water on the adherend. A treatment time depends on the water contact method and the heating temperature, but is preferably, for example, in the range of 10 seconds to 3 minutes. In addition, it is also preferable to promote separation by applying a mechanical external force to the adherend or irradiating the adherend with an ultrasonic wave when the adherend comes into contact with water having a temperature ranging from room temperature to about a temperature of lukewarm water.

The processing step is a step of processing the temporarily adhered members into a desired shape between the temporary adhesion fixation and the separation step. In the processing step, processing such as cutting, grinding, polishing, or etching may be performed into the desired shape.

## EXAMPLES

Hereinafter, the present invention will be specifically described based on Examples. Note that the present invention is not limited to these Examples. In addition, in the following description, "parts" and "%" mean "parts by mass" and "mass%", respectively, unless otherwise specified.

Various physical property values were measured as follows.

<Residual rate after immersion of cured product in water>

The residual rate after immersion of a cured product of the adhesive composition in water was measured as follows.

One (1) μL of N,N-dimethyl-p-toluidine was added to 1.0 g of the adhesive composition, and the mixture was stirred. Then, 1.0 g of a disk-shaped cured product having a diameter of 25 mm and a thickness of 2 mm, obtained by leaving the mixture at 23°C and 60% RH for 24 hours and curing the mixture, was put in 50 g of pure water at 23°C, and the mixture was stirred for 1 hour. After the stirring, a liquid in which the cured product was dispersed and/or dissolved was filtered off with filter paper of 5 types A specified in JIS P 3801 (1995), to calculate a residual rate of insoluble components.

$$\text{Residual rate (mass\%)} = \text{(dry mass of insoluble components)/(mass of cured product used)} \times 100$$

<Residual rate after immersion of cured product in water after permeation into cotton canvas and curing of adhesive composition>

The residual rate of the cured product after immersion in water after the adhesive composition was permeated into the cotton canvas and cured was measured as follows.

The adhesive composition (0.2 g) was impregnated into a central part of a cotton canvas having a length of 7,681 m (8,400 yards) and a density of 510 g/m$^2$ per 453.6 g (1 pound) of weight of yarn of 5 cm square (cotton canvas No. 9 defined in JIS L 3102 (1997)). The cotton canvas was left to stand at 23°C and 60% RH for 24 hours to cure the adhesive composition, and then immersed in 80 mL of water at 23°C or 40°C for 2 hours. The residual rate was calculated from the weight after the surface of the cloth was washed with water at 23°C and then dried at 23°C for 24 hours.

$$\text{Residual rate (mass\%) in cotton canvas} = \{\text{(mass of cotton canvas before immersion (including adhesive)} - \text{(dry mass of cotton canvas dried after immersion (including remaining cured product of adhesive))}\}/\text{(mass of adhesive composition used)} \times 100$$

<Total light transmittance and haze value>

The total light transmittance and the haze value were measured as follows.

The adhesive composition (0.18 g) was added to 90 g of water at 23°C with stirring, and the mixture is stirred as it is at room temperature (23°C) for 15 minutes to obtain a suspension. The obtained suspension was put in a 50 mL cell for a turbidimeter, and the total light transmittance and the haze value were measured in accordance with JIS K0115 using a turbidimeter (NDH 2000 manufactured by Nippon Denshoku Industries Co., Ltd.).

<Contact angle with glass>

The contact angle with glass was measured as follows.

The contact angle of the adhesive composition with glass was measured using a white glass (S111 manufactured by Matsunami Glass Ind., Ltd.) in accordance with JIS R 3703 (1998) and using a contact angle measuring apparatus (OCA20 manufactured by EKO Instruments Co., Ltd.) in accordance with JIS R 3257 (1999). The measurement conditions were as follows: dropping amount: 8 μL, dropping rate: 5 μL/s, and time to measurement: 3 seconds.

(Examples 1 to 7 and Comparative Examples 1 and 2)

<Production of test piece>

The 2-cyanoacrylate compound shown in Table 1 or a mixture obtained by mixing the water-soluble compound shown in Table 1 with the 2-cyanoacrylate compound shown in Table 1 in the amount shown in Table 1 was used as an adhesive composition.

About 1 g of the obtained adhesive composition was poured into a polyethylene container having a diameter of 25 mm. One (1) μL of N,N-dimethyl-p-toluidine was added, followed by stirring. Then, the mixture was allowed to

stand at room temperature (23°C) and 60% RH for 24 hours, so that the adhesive composition was completely cured. A cured product having a diameter of 25 mm and a thickness within the range of 2 ± 0.2 mm was produced. After curing, the cured product was taken out from the container and used for testing and evaluation.

<Adhesion and water peelability test>

Adhesion and peeling tests were performed by three evaluators using each of the adhesive compositions according to the Examples and the Comparative Examples with human fingers.

One drop of the adhesive composition was placed on the index finger, and the thumb was lightly pressed against the index finger to spread the adhesive composition thinly, and the thumb and the index finger were adhered to each other.

For all of the adhesive compositions, the thumb and the index finger did not peel off within 30 seconds.

Next, the fingers adhered were soaked in water at 23°C and gently rubbed, and the time until the thumb and the index finger were separated was measured. The results of calculating the average value of the measured values by the three evaluators are shown in Table 1.

[Table 1]

| | 2-Cyanoacrylate compound + water-soluble compound | Residual rate (mass%) after immersion | Residual rate (mass%) after immersion of cured product in water after permeation into cotton canvas and curing of adhesive composition | | Suspension | | Contact angle (°) | Finger adhesion test (sec) |
|---|---|---|---|---|---|---|---|---|
| | | of cured product in water | Immersed in water at 23°C for 2 hr | Immersed in water at 40°C for 30 min | Total light transmittance (%) | Haze (%) | | |
| Example 1 | 2-[2-(2-Methoxyethoxy)ethoxy]ethyl cyanoacrylate | 0 | 0 | 8.4 | 71.1 | 35.9 | 40.3 | 10 |
| Example 2 | 2-[2-(2-Methoxyethoxy)ethoxy]ethyl cyanoacrylate/2-(2-methoxyethoxy) ethyl cyanoacrylate =7/3 | 9.8 | 6.7 | 13.4 | 88.2 | 4.5 | 39.1 | 15 |
| Example 3 | 2-[2-(2-Methoxyethoxy)ethoxy]ethyl cyanoacrylate/2-(2-methoxyethoxy) ethyl cyanoacrylate =6/4 | 11.6 | 7.0 | 10.8 | 85.9 | 4.9 | 38.9 | 15 |
| Example 4 | 2-[2-(2-Methoxyethoxy)ethoxy]ethyl cyanoacrylate/2-(2-methoxyethoxy) ethyl cyanoacrylate =5/5 | 87.3 | 84.9 | 85.1 | 64.1 | 27.1 | 38.3 | 30 |
| Example 5 | 2-[2-(2-Methoxyethoxy)ethoxy]ethyl-2-cyanoacrylate/2-(2-methoxyethoxy)ethyl cyanoacrylate =5/5, 20 mass% of triethylene glycol dimethyl ether | 45.0 | 44.2 | 57.7 | 75.6 | 17.6 | 38.8 | 20 |
| Example 6 | 2-[2-(2-Methoxyethoxy)ethoxy]ethyl-2-cyanoacrylate/2-(2-methoxyethoxy)ethyl cyanoacrylate =5/5, 20 mass% of sulfolane | 50.4 | 46.5 | 58.1 | 77.3 | 15.5 | 38.6 | 20 |
| Example 7 | 2-[2-(2-Methoxyethoxy)ethoxy]ethyl-2-cyanoacrylate/2-ethoxyethyl-2-cyanoacrylate = 9/1 | 63.6 | 55.1 | 60.9 | 53.3 | 54.0 | 39.0 | 30 |
| Comparative Example 1 | Ethoxyethyl cyanoacrylate | 100.1 | 102.6 | 104.0 | 3.5 | 99.1 | 29.9 | >120 |

(continued)

| | 2-Cyanoacrylate compound + water-soluble compound | Residual rate (mass%) after immersion | Residual rate (mass%) after immersion of cured product in water after permeation into cotton canvas and curing of adhesive composition | | Suspension | | Contact angle (°) | Finger adhesion test (sec) |
|---|---|---|---|---|---|---|---|---|
| | | of cured product in water | Immersed in water at 23°C for 2 hr | Immersed in water at 40°C for 30 min | Total light transmittance (%) | Haze (%) | | |
| Comparative Example 2 | 2-(2-Methoxyethoxy)ethyl cyanoacrylate | 100.2 | 103.8 | 104.0 | 9.5 | 98.4 | 36.3 | 120 |

In Comparative Examples 1 and 2 in Table 1, the reason why the residual rate after immersion of the cured product in water exceeded 100 mass% is presumed to be that the cured product slightly absorbed water to increase the mass.

As shown in Table 1, the easily water-dismantlable adhesive compositions of Examples 1 to 7 could be easily peeled or removed with water after being cured, as compared with the adhesive composition of Comparative Example 1 or 2.

In addition, the easily water-dismantlable adhesive compositions of Examples 1 to 7 had a small residual rate when the cured product was immersed in water, and had a small residual rate when the cotton canvas to which the cured product adhered was immersed in water even when the cured product was attached to the cotton canvas, and the removability of the cured product was excellent.

(Example 8)

Two 2-cyanoacrylate compounds shown in Table 2 were mixed in a mixing ratio (by mass) shown in Table 2 to obtain an adhesive composition of Example 8.

Using each of the adhesive compositions of Examples 1 to 8 and the adhesive compositions of Comparative Examples 1 and 2, the following evaluations were performed. The evaluation results are shown in Table 2.

<Residual rate after immersion of cured product in water (with stirring)>

One (1) μL of N,N-dimethyl-p-toluidine was added to 1.0 g of the adhesive composition, and the mixture was stirred. Then, 1.0 g of a disk-shaped cured product having a diameter of 25 mm and a thickness of 2 mm, obtained by leaving the mixture at 23°C and 60% RH for 24 hours and curing the mixture, was put in 50 g of pure water at 23°C, and the mixture was stirred for 1 hour under a condition of 500 rpm. After the stirring, a liquid in which the cured product was dispersed and/or dissolved was filtered off with filter paper of 5 types A specified in JIS P 3801 (1995), to calculate a residual rate of insoluble components.

$$\text{Residual rate (mass\%)} = \text{(dry mass of insoluble components)/(mass of cured product used)} \times 100$$

<Time until visually recognized disappearance of solid substance of cured product after immersion of cured product in water (with stirring)>

One (1) μL of N,N-dimethyl-p-toluidine was added to 1.0 g of the adhesive composition, and the mixture was stirred. Then, 1.0 g of a disk-shaped cured product having a diameter of 25 mm and a thickness of 2 mm, obtained by leaving the mixture at 23°C and 60% RH for 24 hours and curing the mixture, was put in 50 g of pure water at 23°C, and the mixture was stirred for 1 hour under a condition of 500 rpm. After the stirring was started, visual confirmation was performed every 10 minutes to measure the time until a solid substance of the cured product disappeared.

[Table 2]

| | 2-Cyanoacrylate compound + water-soluble compound | Residual rate (mass%) 1 hr after immersion of cured product in water | Time until disappearance after immersion of cured product in water (min) |
|---|---|---|---|
| Example 1 | 2-[2-(2-Methoxyethoxy)ethoxy]ethyl-2-cyanoacrylate | 0 | 60 |
| Example 2 | 2-[2-(2-Methoxyethoxy)ethoxy]ethyl-2-cyanoacrylate/2-(2-methoxyethoxy)ethyl-2-cyanoacrylate =7/3 | 9.8 | 70 |
| Example 3 | 2-[2-(2-Methoxyethoxy)ethoxy]ethyl-2-cyanoacrylate/2-(2-methoxyethoxy)ethyl-2-cyanoacrylate =6/4 | 11.6 | 90 |

(continued)

| | 2-Cyanoacrylate compound + water-soluble compound | Residual rate (mass%) 1 hr after immersion of cured product in water | Time until disappearance after immersion of cured product in water (min) |
|---|---|---|---|
| Example 4 | 2-[2-(2-Methoxyethoxy)ethoxy]ethyl-2-cyanoacrylate/2-(2-methoxyethoxy)ethyl cyanoacrylate =5/5 | 87.3 | 180 |
| Example 5 | 2-[2-(2-Methoxyethoxy)ethoxy]ethyl-2-cyanoacrylate/2-(2-methoxyethoxy)ethyl cyanoacrylate =5/5, 20 mass% of triethylene glycol dimethyl ether | 45.0 | 90 |
| Example 6 | 2-[2-(2-Methoxyethoxy)ethoxy]ethyl-2-cyanoacrylate/2-(2-methoxyethoxy)ethyl cyanoacrylate =5/5, 20 mass% of sulfolane | 50.4 | 90 |
| Example 7 | 2-[2-(2-Methoxyethoxy)ethoxy]ethyl-2-cyanoacrylate/2-ethoxyethyl-2-cyanoacrylate = 9/1 | 63.6 | 120 |
| Example 8 | 2-[2-(2-Methoxyethoxy)ethoxy]ethyl-2-cyanoacrylate/2-(2-methoxyethoxy)ethyl-2-cyanoacrylate = 8/2 | 9.3 | 70 |
| Comparative Example 1 | 2-Ethoxyethyl-2-cyanoacrylate | 100.1 | > 4,320 |
| Comparative Example 2 | 2-(2-Methoxyethoxy)ethyl-2-cyanoacry late | 100.2 | > 4,320 |

In Comparative Examples 1 and 2 in Table 2, the reason why the residual rate after immersion of the cured product in water exceeded 100 mass% is presumed to be that the cured product slightly absorbed water to increase the mass.

As shown in Table 2, in the adhesive compositions of Examples 1 to 8, the residual rate after immersion of the cured product in water was smaller than that in Comparative Example 1 or 2. In the adhesive compositions of Examples 1 to 8, the solid substance of the cured product disappeared within 180 minutes, but, in the adhesive compositions of Comparative Examples 1 and 2, the solid substance of the cured product did not disappear even after 72 hours (4,320 minutes).

Therefore, the adhesive compositions of Examples 1 to 8 were superior in removability of the cured product to the adhesive composition of Comparative Example 1 or 2.

The easily water-dismantlable adhesive composition of the present invention contains a 2-cyanoacrylate compound represented by Formula (1), and can be used as a so-called instant adhesive in a wide range of products and technical fields such as general household uses, teaching materials, building materials, and medical fields as well as various industrial fields. In particular, it is useful for temporary adhesion and for teaching materials.

In addition, the easily water-dismantlable adhesive composition of the present invention can be suitably used for adhesion not only between the same kind of materials to be adhered to each other but also between different kinds of materials to be adhered to each other (for example, between a metal and a resin).

The disclosure of Japanese Patent Application No. 2019-146573 filed on August 8, 2019 is incorporated herein by reference in its entirety.

All documents, patent applications, and technical standards described herein are incorporated herein by reference to the same extent as if each document, patent application, and technical standard are specifically and individually indicated to be incorporated by reference.

## Claims

1. An easily water-dismantlable adhesive composition comprising a 2-cyanoacrylate compound represented by the

following Formula (1):

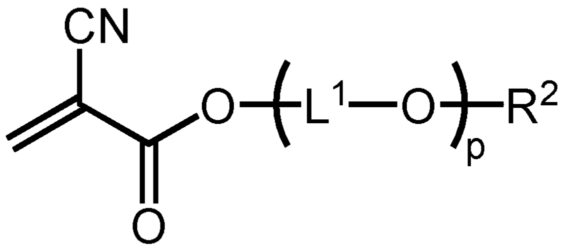

(1)

wherein $L^1$'s each independently represent $-CH_2CH_2-$, $-CH(R^1)CH_2-$, or $-CH_2CH(R^1)-$, $R^1$ represents an alkyl group having 1 to 3 carbon atoms, $R^2$ represents a linear or branched alkyl group having 1 to 4 carbon atoms, p represents an integer of 3 to 6, and, among p $-L^1-O-$'s in Formula (1), 2 to 4 $-L^1-O-$'s are $-CH_2CH_2-O-$, and 0 to 2 $-L^1-O-$'s are $-CH(R^1)CH_2-$ and/or $-CH_2CH(R^1))-O-$.

2. The easily water-dismantlable adhesive composition according to claim 1, wherein a residual rate of insoluble components in water is 90 mass% or less, after adding 1 μL of N,N-dimethyl-p-toluidine to 1.0 g of the adhesive composition; stirring the mixture; then putting 1.0 g of a disk-shaped cured product having a diameter of 25 mm and a thickness of 2 mm, obtained by leaving the mixture at 23°C and 60% RH for 24 hours and curing the mixture, in 50 g of pure water at 23°C; and stirring the mixture for 1 hour.

3. The easily water-dismantlable adhesive composition according to claim 1 or 2, wherein an adhesive residual rate is 90 mass% or less, after impregnating 0.2 g of the adhesive composition into a central part of a piece having a size of 5 cm × 5 cm, obtained by cutting a cotton canvas having a length of 7,681 m and a density of 510 $g/m^2$ per 453.6 g of weight of yarn; leaving the piece to stand at 23°C and 60% RH for 24 hours; and immersing the piece in 80 g of water at 23°C for 2 hours.

4. The easily water-dismantlable adhesive composition according to any one of claims 1 to 3, wherein an adhesive residual rate is 90 mass% or less, after impregnating 0.2 g of the adhesive composition into a central part of a piece having a size of 5 cm × 5 cm, obtained by cutting a cotton canvas having a length of 7,681 m and a density of 510 $g/m^2$ per 453.6 g of weight of yarn; leaving the piece to stand at 23°C and 60% RH for 24 hours; and immersing the piece in 80 g of water at 40°C for 0.5 hours.

5. The easily water-dismantlable adhesive composition according to any one of claims 1 to 4, wherein a total light transmittance of a suspension obtained by mixing 0.18 g of the adhesive composition with 90 g of water at 23°C is 20% or more.

6. The easily water-dismantlable adhesive composition according to any one of claims 1 to 5, wherein a haze value of the suspension obtained by mixing 0.18 g of the adhesive composition with 90 g of water at 23°C is 90% or less.

7. The easily water-dismantlable adhesive composition according to any one of claims 1 to 6, wherein a contact angle of the adhesive composition with glass is 38.0° or more.

8. The easily water-dismantlable adhesive composition according to any one of claims 1 to 7, further comprising a water-soluble compound.

9. The easily water-dismantlable adhesive composition according to claim 8, wherein the water-soluble compound is at least one compound selected from the group consisting of ethylene carbonate, dimethyl sulfone, sulfolane, γ-butyrolactone, propylene carbonate, triethylene glycol dimethyl ether, tetraethylene glycol dimethyl ether, polyoxyalkylene decyl ether, and fatty acid polyoxyethylene glycerol borate.

10. The easily water-dismantlable adhesive composition according to any one of claims 1 to 9, wherein a residual rate in water is 90 mass% or less, after adding 1 μL of N,N-dimethyl-p-toluidine to 1.0 g of the adhesive composition; stirring the mixture; then putting 1.0 g of a disk-shaped cured product having a diameter of 25 mm and a thickness of 2 mm, obtained by leaving the mixture at 23°C and 60% RH for 24 hours and curing the mixture, in 50 g of pure water at 23°C; and stirring the mixture for 1 hour under a condition of 500 rpm, and a time from start of the stirring until visually recognized disappearance of a solid substance of the cured product is 24 hours or less.

**11.** The easily water-dismantlable adhesive composition according to any one of claims 1 to 10, which is an easily water-dismantlable adhesive composition for temporary fixation.

**12.** The easily water-dismantlable adhesive composition according to any one of claims 1 to 11, which is an easily water-dismantlable adhesive composition for teaching materials.

**INTERNATIONAL SEARCH REPORT**

International application No. PCT/JP2020/029906

A. CLASSIFICATION OF SUBJECT MATTER
C09J 4/04(2006.01)i; C09J 11/06(2006.01)i
FI: C09J4/04; C09J11/06
According to International Patent Classification (IPC) or to both national classification and IPC

B. FIELDS SEARCHED
Minimum documentation searched (classification system followed by classification symbols)
C09J4/04; C09J11/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 62-153370 A (KABUSHIKI KAISHA ALPHA GIKEN) 08.07.1987 (1987-07-08) claims, examples 1-53 | 1-12 |
| A | JP 2000-73015 A (MATSUMOTO PHARM. IND. CO., LTD.) 07.03.2000 (2000-03-07) claims, examples 1-9 | 1-12 |
| A | JP 2008-229213 A (TERUMO CORP.) 02.10.2008 (2008-10-02) claims, examples 1-10 | 1-12 |
| A | JP 4-70323 A (KABUSHIKI KAISHA ALPHA GIKEN) 05.03.1992 (1992-03-05) claims, examples 1, 2 | 1-12 |
| A | JP 1-83057 A (OHARA PARAGIUM CHEMICAL CO., LTD.) 28.03.1989 (1989-03-28) claims, examples 1-5 | 1-12 |
| A | JP 2014-532488 A (INSTITUTE OF PHARMACOLOGY AND TOXICOLOGY ACADEMY OF MILITARY MEDICAL SCIENCES P.L.A. CHINA) 08.12.2014 (2014-12-08) claims, examples 1-15 | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 September 2020 (25.09.2020) | 13 October 2020 (13.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/029906

C (Continuation). DOCUMENTS CONSIDERED TO BE RELEVANT

| Category* | Citation of document, with indication, where appropriate, of the relevant passages | Relevant to claim No. |
|---|---|---|
| P, A | WO 2019/156227 A1 (TOAGOSEI CO., LTD.) 15.08.2019 (2019-08-15) claims, examples 1-44 | 1-12 |
| P, A | WO 2019/156228 A1 (TOAGOSEI CO., LTD.) 15.08.2019 (2019-08-15) claims, example 1 | 1-12 |

Form PCT/ISA/210 (continuation of second sheet) (January 2015)

**INTERNATIONAL SEARCH REPORT**
Information on patent family members

International application no.
PCT/JP2020/029906

| Patent Documents referred in the Report | Publication Date | Patent Family | Publication Date |
|---|---|---|---|
| JP 62-153370 A | 08 Jul. 1987 | US 4749778 A<br>claims, examples 1-53<br>EP 229367 A1<br>CA 1306822 A<br>AU 6696686 A<br>KR 10-1990-0002833 B1 | |
| JP 2000-73015 A | 07 Mar. 2000 | (Family: none) | |
| JP 2008-229213 A | 02 Oct. 2008 | (Family: none) | |
| JP 4-70323 A | 05 Mar. 1992 | (Family: none) | |
| JP 1-83057 A | 28 Mar. 1989 | (Family: none) | |
| JP 2014-532488 A | 08 Dec. 2014 | US 2014/0369952 A1<br>claims, examples 1-15<br>WO 2013/064059 A1<br>EP 2792372 A1<br>CN 103083718 A | |
| WO 2019/156227 A1 | 15 Aug. 2019 | TW 201938718 A | |
| WO 2019/156228 A1 | 15 Aug. 2019 | TW 201936594 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000073015 A
- JP 2011104747 A
- JP 2019146573 A